# EUROPÄISCHE PATENTANMELDUNG

(11) **EP 4 722 824 A1**
(43) Veröffentlichungstag der Anmeldung: **08.04.2026**
(21) Anmeldenummer: 25202070.6
(22) Anmeldetag: 15.09.2025
(51) Int. Cl.: G04C 11/00, G04C 9/00, G04C 13/04, G01B 21/22, G01P 15/00, G04C 3/14

(54) **TURMUHR UND VERFAHREN ZU DEREN BETRIEB**

(30) Priorität: 01.10.2024 DE 102024128330
(71) Anmelder: Peitsch, Peter, 99099 Erfurt (DE); Jurisch, Reinhard, 99438 Meckfeld bei Bad Berka (DE); Jurisch, Fabian, 65812 Bad Soden (DE)
(72) Erfinder: Peitsch, Peter, 99099 Erfurt (DE); Jurisch, Reinhard, 99438 Meckfeld bei Bad Berka (DE); Jurisch, Fabian, 65812 Bad Soden (DE)
(74) Vertreter: Liedtke & Partner Patentanwälte

(57) **Zusammenfassung**

Die Erfindung betrifft eine Turmuhr (1), aufweisend
- eine Uhrzeitanzeigeeinheit (2) mit einem Zifferblatt (3) und mindestens zwei Zeigern,
- einen Schrittmotor (4), der mit dem ersten Zeiger (Z1) über eine erste Uhrenwelle (W1) verbunden ist,
- einen als 2D-Beschleunigungssensor oder als 3D-Beschleunigungssensor ausgebildeten Beschleunigungssensor (5), der an dem ersten Zeiger (Z1) oder an der ersten Uhrenwelle (W1) befestigt ist,
- eine Leseeinheit (6) zum Auslesen des Beschleunigungssensors (5), und
- einen mit der Leseeinheit (6) und mit dem Schrittmotor (4) gekoppelten Steuercomputer (7), der ausgebildet ist zum Empfangen eines Zeitsignals (ZS), zum Empfangen eines durch die Leseeinheit (6) ausgelesenen Zeigerpositionssignals (PS) des Beschleunigungssensors (5) und zur Ansteuerung des Schrittmotors (4) in Abhängigkeit vom Zeitsignal (ZS) und vom Zeigerpositionssignal (PS).

Des Weiteren betrifft die Erfindung ein Verfahren zum Betrieb der Turmuhr (1).

## Beschreibung

Die Erfindung betrifft eine Turmuhr und ein Verfahren zum Betrieb der Turmuhr.

Aus dem Stand der Technik sind Turmuhren allgemein bekannt. Solche Turmuhren weisen ein Zifferblatt, einen Stundenzeiger und einen Minutenzeiger auf. Die Zeiger sind mit einem Uhrwerk verbunden und werden durch das Uhrwerk bewegt.

Der Erfindung liegt die Aufgabe zu Grunde, eine gegenüber dem Stand der Technik verbesserte Turmuhr und ein gegenüber dem Stand der Technik verbessertes Verfahren zum Betrieb der Turmuhr anzugeben.

Die Aufgabe wird erfindungsgemäß gelöst durch eine Turmuhr mit den Merkmalen des Anspruchs 1 und ein Verfahren zum Betrieb der Turmuhr mit den Merkmalen des Anspruchs 11.

Vorteilhafte Ausgestaltungen der Erfindung sind Gegenstand der Unteransprüche.

Eine Turmuhr weist eine Uhrzeitanzeigeeinheit mit einem Zifferblatt und mindestens zwei Zeigern auf. Beispielsweise ist der erste Zeiger ein Minutenzeiger und der zweite Zeiger ein Stundenzeiger. Alternativ weist die Uhrzeitanzeigeeinheit beispielsweise drei Zeiger auf. Der erste Zeiger ist dann ein Sekundenzeiger, der zweite Zeiger ist der Minutenzeiger und der dritte Zeiger ist der Stundenzeiger.

Unter dem Begriff Turmuhr wird insbesondere eine immobile Uhr verstanden, insbesondere eine in einem Gebäude, beispielsweise in einem Turm, zum Beispiel in einem Kirchturm oder Uhrturm, oder an einem Bahnhof oder anderen Gebäude fest eingebaute Uhr. Unter dem Begriff Turmuhr wird insbesondere eine große Uhr verstanden, insbesondere eine Uhr, welche für die Öffentlichkeit bestimmt ist und aus großen Entfernungen sichtbar sein soll bzw. ist.

Die Turmuhr weist des Weiteren einen Schrittmotor auf, der mit dem ersten Zeiger über eine erste Uhrenwelle verbunden ist. Die erste Uhrenwelle ist dabei fest mit dem ersten Zeiger verbunden. Zifferblatt und erster Zeiger weisen insbesondere eine parallele Ausrichtung auf. Zeigerwelle und erster Zeiger weisen insbesondere eine orthogonale Ausrichtung auf. Zeigerwelle und Zifferblatt weisen insbesondere eine orthogonale Ausrichtung auf.

Die Turmuhr weist zudem einen als 2D-Beschleunigungssensor oder als 3D-Beschleunigungssensor ausgebildeten Beschleunigungssensor auf, der an dem ersten Zeiger oder an einem mit dem ersten Zeiger mechanisch direkt, vorteilhafterweise drehfest, verbundenen Teil, beispielsweise an der ersten Uhrenwelle oder an einem Zahnrad, befestigt ist, insbesondere derart befestigt ist, dass der Beschleunigungssensor eine jeweilige Winkelposition des ersten Zeigers über das Gravitationsfeld der Erde bestimmen kann. Der Beschleunigungssensor ist insbesondere als ein passiver RFID-Sensortransponder ausgebildet. Dieser Beschleunigungssensor ermöglicht es, über einen Bezug zur Erdbeschleunigung g von 9,81 m/s² in zwei bzw. drei Dimensionen, d. h. in den Achsenrichtungen eines zweidimensionalen bzw. dreidimensionalen Koordinatensystems, seine Ausrichtung, d. h. insbesondere die Neigungs- bzw. Winkelposition, zu bestimmen. Da der Beschleunigungssensor am ersten Zeiger oder an der ersten Uhrenwelle befestigt ist, kann darüber auch die Ausrichtung des ersten Zeigers und somit eine jeweils tatsächlich vorliegende Zeigerposition des ersten Zeigers ermittelt werden.

Der 2D-Beschleunigungssensor weist insbesondere zwei, insbesondere statische, Beschleunigungssensoreinheiten auf, die um 90° verdreht zueinander angeordnet sind und jeweils die Beschleunigung messen. Der 3D-Beschleunigungssensor weist insbesondere drei, insbesondere statische, Beschleunigungssensoreinheiten auf, die um 90° verdreht zueinander angeordnet sind und jeweils die Beschleunigung messen. Es ist insbesondere vorgesehen, dass in dem jeweiligen Quadranten des Zeigerumlaufes diejenige Beschleunigungssensoreinheit mit der steilsten Änderung der Beschleunigungsmessung, also insbesondere beim Nulldurchgang der Sinusfunktion, zur Neigungsmessung und somit zur Bestimmung der Zeigerposition verwendet wird.

Die Turmuhr weist des Weiteren eine Leseeinheit auf, die zum Auslesen, insbesondere zum kontaktlosen Auslesen, des Beschleunigungssensors ausgebildet, eingerichtet und angeordnet ist. Die Leseeinheit ist insbesondere als eine RFID-Leseeinheit zum Auslesen des als RFID-Sensortransponder ausgebildeten Beschleunigungssensors ausgebildet. Die Leseeinheit ist derart angeordnet, dass sie sich jederzeit, d. h. in jeder Position des Beschleunigungssensors, in Auslesereichweite zum Beschleunigungssensor befindet. Die Leseeinheit ist insbesondere feststehend angeordnet. Bei mehreren Beschleunigungssensoren, die mit derselben Leseeinheit ausgelesen werden, ist die Leseeinheit derart angeordnet, dass sie sich jederzeit, d. h. in jeder Position des jeweiligen Beschleunigungssensors, in Auslesereichweite zum jeweiligen Beschleunigungssensor befindet.

Die Verwendung der RFID-Technologie, d. h. des als RFID-Sensortransponder ausgebildeten Beschleunigungssensors und der RFID-Leseeinheit, ermöglicht ein kabelloses und kontaktloses Auslesen des Beschleunigungssensors und insbesondere eine kleine Ausgestaltung des Beschleunigungssensors, so dass dieser am ersten Zeiger oder an der ersten Uhrenwelle befestigt werden kann.

Der Beschleunigungssensor dieses RFID-Sensortransponders ist insbesondere als ein MEMS-Beschleunigungssensor ausgebildet. Die Abkürzung MEMS steht für Mikrosystem oder mikro-elektromechanisches System. Dies ist ein miniaturisiertes Gerät, eine Baugruppe oder ein Bauteil, dessen Komponenten kleinste Abmessungen im Bereich von 1 µm haben und als System zusammenwirken.

Zudem weist die Turmuhr einen mit der Leseeinheit und mit dem Schrittmotor gekoppelten Steuercomputer auf, der ausgebildet ist zum Empfangen eines Zeitsignals, zum Empfangen eines durch die Leseeinheit ausgelesenen Zeigerpositionssignals des Beschleunigungssensors und zur Ansteuerung des Schrittmotors in Abhängigkeit vom Zeitsignal und vom Zeigerpositionssignal. Die Leseeinheit ist insbesondere über ein Kabel, insbesondere Datenübertragungskabel und Energieversorgungskabel, mit dem Steuercomputer gekoppelt, insbesondere zur Datenübertragung und Energieversorgung der Leseeinheit.

Als Zeitsignal wird beispielsweise eine Uhrzeit einer internen Quarzuhr des Steuercomputers, ein Zeitsignal des Zeitzeichensenders DCF77, die Internetzeit oder die Zeitreferenz eines GPS-Satelliten verwendet.

Das Zeigerpositionssignal des Beschleunigungssensors beinhaltet insbesondere eine Aussage bezüglich der jeweils vorliegenden Zeigerposition des ersten Zeigers, insbesondere in Form von aus der Einwirkung der Erdbeschleunigung auf den Beschleunigungssensor resultierenden Beschleunigungswerten in zwei oder drei Dimensionen bzw. in Form von dazu korrespondierenden Sensorwerten. Es ist insbesondere vorgesehen, dass der Steuercomputer aus diesem Zeigerpositionssignal die tatsächlich vorliegende Zeigerposition ermittelt. Der Schrittmotor wird dann durch den Steuercomputer in Abhängigkeit vom Zeitsignal und von der mittels des Zeigerpositionssignals ermittelten tatsächlich vorliegenden Zeigerposition angesteuert, wenn diese tatsächlich vorliegende Zeigerposition von einer dem Zeitsignal entsprechenden Zeigerposition abweicht, zumindest dann, wenn diese Abweichung über einem vorgegebenen Limit liegt.

Der als passiver RFID-Sensortransponder ausgebildete Beschleunigungssensor und die als RFID-Leseeinheit ausgebildete Leseeinheit arbeiten beispielsweise im Hochfrequenzbereich, kurz HF-Bereich, insbesondere bei 13,56 MHz, oder im Ultrahochfrequenzbereich, kurz UHF-Bereich, insbesondere bei 900 MHz.

Sind der als passiver RFID-Sensortransponder ausgebildete Beschleunigungssensor und die als RFID-Leseeinheit ausgebildete Leseeinheit für den HF-Bereich ausgebildet, wird dadurch beispielsweise ein Auslesen des Beschleunigungssensors mittels der Leseeinheit bis zu einem Abstand der Leseeinheit vom Beschleunigungssensor von 5 m ermöglicht. Der als passiver RFID-Sensortransponder ausgebildete Beschleunigungssensor ist dann, insbesondere inklusive seiner Antenne oder Antennen, beispielsweise länglich ausgebildet und weist beispielsweise eine Länge von 17 cm auf. Dieser Beschleunigungssensor ist beispielweise am ersten Zeiger befestigt, wobei er sich mit seiner Längsausdehnung parallel zur Längsausdehnung des ersten Zeigers erstreckt. Alternativ ist dieser Beschleunigungssensor beispielsweise an der ersten Uhrenwelle befestigt, wobei er sich mit seiner Längsausdehnung in Axialrichtung der ersten Uhrenwelle erstreckt. Aufgrund der großen Reichweite und des dadurch ermöglichten großen Abstandes zwischen Beschleunigungssensor und Leseeinheit muss die Leseeinheit nicht in unmittelbarer Nähe des Beschleunigungssensors und somit bei dessen Anordnung am ersten Zeiger auch nicht in unmittelbarer Nähe des ersten Zeigers sein. Somit ist auch bei Zeigerdrehungen des bei Turmuhren sehr groß ausgebildeten ersten Zeigers und bei einer Befestigung des Beschleunigungssensors am ersten Zeiger jederzeit ein sicheres Auslesen des Beschleunigungssensors mittels der unbeweglich angeordneten Leseeinheit ermöglicht.

Sind der als passiver RFID-Sensortransponder ausgebildete Beschleunigungssensor und die als RFID-Leseeinheit ausgebildete Leseeinheit für den UHF-Bereich ausgebildet, wird dadurch beispielsweise ein Auslesen des Beschleunigungssensors mittels der Leseeinheit bis zu einem Abstand der Leseeinheit vom Beschleunigungssensor von 5 cm ermöglicht. Der Beschleunigungssensor kann hierbei vorteilhafterweise besonders klein ausgebildet sein. Er ist dann beispielsweise auf der ersten Uhrenwelle oder auf einem anderen mit dem ersten Zeiger mechanisch direkt, vorteilhafterweise drehfest, verbundenen Teil befestigt, insbesondere an einem Teil, welches seinen Abstand zur unbeweglich angeordneten Leseeinheit nicht verändert, so dass auch der Beschleunigungssensor seinen Abstand zur Leseeinheit nicht oder nur durch die Drehung dieses Teils geringfügig ändert und somit stets innerhalb dieses Abstands zur Leseeinheit verbleibt. Dadurch wird jederzeit ein sicheres Auslesen des Beschleunigungssensors mittels der unbeweglich angeordneten Leseeinheit ermöglicht.

In einem erfindungsgemäßen Verfahren zum Betrieb der Turmuhr ist somit insbesondere vorgesehen, dass in vorgegebenen Zeitintervallen von beispielsweise 30 Sekunden jeweils das Zeigerpositionssignal ausgelesen wird, daraus, insbesondere im Steuercomputer, eine tatsächlich vorliegende Zeigerposition ermittelt wird, die ermittelte tatsächlich vorliegende Zeigerposition, insbesondere im Steuercomputer, mit einer dem Zeitsignal entsprechenden Zeigerposition verglichen wird, bei einer über einem vorgegebenen Limit liegenden Abweichung der ermittelten tatsächlich vorliegenden Zeigerposition von der dem Zeitsignal entsprechenden Zeigerposition eine der Abweichung entsprechende Anzahl von Schritten des Schrittmotors berechnet wird, insbesondere durch den Steuercomputer, und der Schrittmotor, insbesondere durch den Steuercomputer, zur Ausführung der berechneten Anzahl der Schritte angesteuert wird.

Die hier beschriebene Turmuhr weist somit insbesondere kein herkömmliches Uhrwerk auf, d. h. weder ein herkömmliches mechanisches Uhrwerk noch ein herkömmliches elektrisches Uhrwerk, beispielsweise Quarzuhrwerk, sondern die Verstellung der Zeiger, insbesondere des ersten Zeigers und insbesondere über diesen die Verstellung des zweiten Zeigers und, wenn vorhanden, des dritten Zeigers, erfolgt nur mittels des Schrittmotors, durch dessen Ansteuerung mittels des Steuercomputers in Abhängigkeit vom Zeitsignal und von der mittels des Zeigerpositionssignals ermittelten tatsächlich vorliegenden Zeigerposition.

Die erfindungsgemäße Lösung ermöglicht mittels des Beschleunigungssensors eine Kontrolle einer jeweiligen tatsächlich vorliegenden Zeigerposition des ersten Zeigers. Beispielsweise ist auch an dem zweiten Zeiger oder an einer mit dem zweiten Zeiger fest verbundenen zweiten Uhrenwelle ein solcher Beschleunigungssensor befestigt. Weist die Uhrzeitanzeigeeinheit drei Zeiger auf, ist beispielsweise auch an dem dritten Zeiger oder an einer mit dem dritten Zeiger fest verbundenen dritten Uhrenwelle ein solcher Beschleunigungssensor befestigt. Dabei können die mehreren Beschleunigungssensoren, insbesondere wenn sie jeweils als RFID-Sensortransponder ausgebildet sind, mit derselben Leseeinheit, insbesondere RFID-Leseeinheit, ausgelesen werden. Es ist somit vorteilhafterweise auch bei mehreren Beschleunigungssensoren nur eine gemeinsame Leseeinheit vorgesehen. Die Bestimmung der tatsächlichen Zeigerposition erfolgt dann für den mit einem Beschleunigungssensor versehenen zweiten Zeiger und, wenn vorhanden und mit einem Beschleunigungssensor versehen, auch für den dritten Zeiger auf gleiche Weise wie für den ersten Zeiger.

Die Position des jeweiligen Zeigers kann sich beispielsweise durch äußere Einwirkungen, zum Beispiel durch Windlasten, Deformationen, mechanische Alterung von Antrieben und Getrieben verändern. Zudem tritt bei Verwendung von Kardangelenken im Antriebsstrang der Zeiger der so genannte Kardanfehler auf, der ebenfalls zu systematischen Zeitanzeigefehlern führen kann. Bisher wird dies nicht erfasst und daher besteht die Gefahr, dass die tatsächliche Position des jeweiligen Zeigers von einer vorgesehenen Position abweicht und somit eine falsche Uhrzeit angezeigt wird.

Mit dem Begriff "Kardanfehler" ist die ungleichmäßige Drehgeschwindigkeitsübertragung eines Kreuzgelenkes während einer 360°-Drehung gemeint. Bei einer 360°-Drehung beispielsweise einer Kardanwelle treten an den Kreuzgelenken Kardanfehler auf. Damit werden ungleichmäßige Übertragungen der Drehgeschwindigkeit bezeichnet. Während einer kompletten Umdrehung dreht die abgehende Welle periodisch zweimal schneller und zweimal langsamer, aber in der Summe gleich der eingehenden Welle des Kreuzgelenkes. Je stärker die Beugung des Kreuzgelenkes ist, desto höher sind die Drehgeschwindigkeitsunterschiede von eingehender und abgehender Welle.

Des Weiteren bietet die erfindungsgemäße Lösung die Realisierung einer Turmuhr, die jederzeit eine genaue Zeitanzeige sicherstellt, mit einem sehr geringen Aufwand, insbesondere mit einem sehr geringen mechanischen Aufwand, da keine großen, komplizierten, wartungsintensiven und nur schwer und bei hohen Wartungskosten zu wartenden mechanischen Uhrwerke erforderlich sind.

Bei der erfindungsgemäßen Lösung wird die Zeigerposition mittels des Beschleunigungssensors aus einer gravitativen Neigungsmessung ermittelt. Aus dem Vergleich dieser ermittelten Zeigerposition mit der Uhrzeit gemäß dem Zeitsignal wird ermittelt, ob die Zeigerposition mit einer der Uhrzeit entsprechenden Zeigerposition übereinstimmt oder nicht. Wenn die mittels des Beschleunigungssensors ermittelte Zeigerposition von der Zeigerposition gemäß Uhrzeit abweicht, wird der Schrittmotor durch den Steuercomputer zur Verstellung der Zeigerposition angesteuert, zumindest dann, wenn die Abweichung über dem vorgegebenen Limit liegt. Dies erfolgt, bis die dann neu mittels des Beschleunigungssensors ermittelte Zeigerposition mit der Zeigerposition gemäß Uhrzeit übereinstimmt oder die Abweichung innerhalb des vorgegebenen Limits liegt.

Durch eine getaktete Steuerung wird ein geringer Energieverbrauch erreicht. Ein Stelltakt, d. h. das Zeitintervall, zur Überprüfung der Zeigerposition mittels des Beschleunigungssensors und zum gegebenenfalls erforderlichen Nachstellen durch Ansteuern des Schrittmotors ist vorteilhafterweise frei programmierbar. Beispielsweise beträgt der Stelltakt, d. h. das Zeitintervall, 30 Sekunden, wenn der erste Zeiger der Minutenzeiger ist, d. h. alle 30 Sekunden wird dessen Zeigerposition auf die beschriebene Weise überprüft und gegebenenfalls durch Ansteuern des Schrittmotors nachgestellt.

Das Limit, d. h. die zulässige Abweichung der mittels des Beschleunigungssensors ermittelten Zeigerposition von der Zeigerposition gemäß Uhrzeit des Zeitsignals, ist vorteilhafterweise frei programmierbar.

Die Verwendung des Schrittmotors ermöglicht eine gezielte berechenbare Korrektursteuerung über die Gleichung zur Berechnung der Stepper-Schritte des Schrittmotors.

Vorteilhafterweise ist eine Basisroutine zur Selbstkalibrierung des Beschleunigungssensors bei einem jeweiligen 360°-Zeigerumlauf vorgesehen. Das Referenzsignal ist dabei die Erdbeschleunigung von 9,81 m/s². Dadurch werden insbesondere eine Alterung des Beschleunigungssensors und eine temperaturabhängige Übertragungsfunktion ausgeglichen.

Die erfindungsgemäße Lösung ermöglicht zudem eine Umstellung der Turmuhr von Sommerzeit auf Winterzeit und umgekehrt in besonders einfacher Weise. Durch Ermittlung der wirklichen Zeigerpositionen von Minuten- und Stundenzeiger mittels jeweils eines Beschleunigungssensors kann der mittels des Schrittmotors durchgeführte Stellprozess kontrolliert werden.

In einer Ausführungsform weist die Turmuhr einen mechanischen Wandler auf, über welchen der Schrittmotor mit der ersten Uhrenwelle verbunden ist.

In einer Ausführungsform weist die Turmuhr ein Kardangelenk zwischen der ersten Uhrenwelle und einer Ausgangswelle des Schrittmotors oder des mechanischen Wandlers auf. Das Kardangelenk ist dabei einerseits mit der ersten Uhrenwelle und andererseits mit der Ausgangswelle des Schrittmotors oder des mechanischen Wandlers verbunden.

In einer Ausführungsform weist die Leseeinheit eine Durchführungsöffnung für die erste Uhrenwelle auf und ist koaxial zur ersten Uhrenwelle angeordnet, wobei die Durchführungsöffnung einen größeren Durchmesser aufweist als die durch die Durchführungsöffnung hindurchgeführt angeordnete erste Uhrenwelle. Dies ist eine bauliche Form der Leseeinheit zur optimalen Montage im Bereich der ersten Uhrenwelle. Durch die Ausbildung des Durchmessers der Durchführungsöffnung größer als der Durchmesser der ersten Uhrenwelle wird eine Reibung der sich drehenden ersten Uhrenwelle an der feststehenden Leseeinheit vermieden.

In einer Ausführungsform ist der Beschleunigungssensor länglich ausgebildet und/oder in einem länglichen Gehäuse angeordnet und am ersten Zeiger angeordnet. Länglich bedeutet insbesondere, dass eine Länge größer ist, insbesondere viel größer ist, insbesondere um ein Vielfaches größer ist, als eine Breite und/oder ein Durchmesser. Dies ist eine bauliche Form des Beschleunigungssensors zur optimalen Montage an Standardzeigern von Turmuhren. Beispielsweise weist der Beschleunigungssensor und/oder dessen Gehäuse eine Länge von 2 cm bis 15 cm auf. Der RFID-Sensortransponder ist beispielsweise ein UHF- RFID-Sensortransponder mit Dipolantenne auf Lamda-Halbe oder Lamda-Viertel bezüglich der Wellenlänge des Radiosignals, insbesondere des Zeigerpositionssignals.

In einer Ausführungsform ist der Beschleunigungssensor rund ausgebildet und/oder in einem runden Sensorgehäuse angeordnet und koaxial zur ersten Uhrenwelle an der ersten Uhrenwelle befestigt. Dies ist eine bauliche Form des Beschleunigungssensors zur optimalen Montage an der fest mit dem ersten Zeiger verbundenen ersten Uhrenwelle.

In einer Ausführungsform ist der mechanische Wandler über eine zweite Uhrenwelle mit dem zweiten Zeiger verbunden, wobei die erste Uhrenwelle und die zweite Uhrenwelle im mechanischen Wandler über ein Getriebe miteinander gekoppelt sind. Bei dieser Ausführungsform wird somit nur der erste Zeiger, beispielsweise der Minutenzeiger, direkt durch den Schrittmotor verstellt. Der zweite Zeiger, beispielsweise der Stundenzeiger, wird dann über die Verstellung des ersten Zeigers mit verstellt.

Weist die Uhrzeitanzeigeeinheit drei Zeiger auf, ist der mechanische Wandler vorteilhafterweise über die zweite Uhrenwelle mit dem zweiten Zeiger und über die dritte Uhrenwelle mit dem dritten Zeiger verbunden, wobei die erste Uhrenwelle, die zweite Uhrenwelle und die dritte Uhrenwelle im mechanischen Wandler über das Getriebe miteinander gekoppelt sind. Bei dieser Ausführungsform wird somit nur der erste Zeiger, beispielsweise der Sekundenzeiger, direkt durch den Schrittmotor verstellt. Der zweite Zeiger und der dritte Zeiger, beispielsweise der Minutenzeiger und der Stundenzeiger, werden dann über die Verstellung des ersten Zeigers mit verstellt.

In einer Ausführungsform ist der mechanische Wandler als ein Verteiler ausgebildet, über welchen der Schrittmotor mit einem weiteren ersten Zeiger mindestens einer weiteren Uhrzeitanzeigeeinheit oder mit weiteren ersten Zeigern mehrerer weiterer Uhrzeitanzeigeeinheiten über eine bzw. jeweils eine weitere erste Uhrenwelle verbunden ist. Diese Ausführungsform ist beispielsweise für Turmuhren vorgesehen, die an zwei, drei oder vier Seiten eines Bauwerks, insbesondere eines Turms, jeweils eine Uhrzeitanzeigeeinheit aufweisen. Bei dieser Ausführungsform werden dann alle ersten Zeiger durch denselben Schrittmotor bewegt. Dabei kann beispielsweise vorgesehen sein, dass der Beschleunigungssensor oder die Beschleunigungssensoren nur am ersten Zeiger oder an den Zeigern einer der Uhrzeitanzeigeeinheiten angeordnet ist/sind oder am ersten Zeiger oder an den Zeigern mehrerer oder aller Uhrzeitanzeigeeinheiten angeordnet sind. Da man davon ausgehen kann, dass die oben geschilderten Einflüsse, die zu veränderten Zeigerpositionen führen können, für alle Uhrzeitanzeigeeinheiten einer solchen Turmuhr mit mehreren Uhrzeitanzeigeeinheiten gleich sind, ist die Ausstattung des ersten Zeigers oder der Zeiger einer der Uhrzeitanzeigeeinheiten mit Beschleunigungssensoren ausreichend.

Alternativ zu dieser Lösung kann bei mehreren Uhrzeitanzeigeeinheiten an einem Bauwerk, insbesondere Turm, beispielsweise vorgesehen sein, dass jede der Uhrzeitanzeigeeinheiten zu einer eigenen Turmuhr gehört, die wie hier beschrieben ausgebildet ist. Dabei kann jedoch vorgesehen sein, dass zumindest der Steuercomputer dann für alle diese einzelnen Turmuhren verwendet wird. D. h. der Steuercomputer dieser Turmuhren ist dann derselbe. Die Turmuhren weisen dann jedoch insbesondere jeweils einen eigenen Schrittmotor und einen eigenen Beschleunigungssensor oder mehrere eigene Beschleunigungssensoren auf.

In einer Ausführungsform ist der Steuercomputer über ein Datenübertragungsnetzwerk mit einem Zeitsignalgeber (NTP-Server) und/oder mit einem Betreiberserver eines Betreibers der Turmuhr verbunden. Diese Lösung ermöglicht im Zeitalter der Digitalisierung eine praktische und einfache Fernwartung durch die Netzwerkfähigkeit.

Die beschriebene Lösung ermöglicht mittels des Beschleunigungssensors am ersten Zeiger oder mittels der Beschleunigungssensoren an den Zeigern die Erfassung des Zeigerstandes, d. h. der Zeigerposition, an der Turmuhr zur automatischen, kontaktlosen Ablesung des Zeigerstandes, d. h. der Zeigerposition.

Die beschriebene Erfassung der Zeigerposition, insbesondere des ersten Zeigers, mittels des Beschleunigungssensors kann alternativ zur hier beschriebenen Turmuhrlösung, beispielsweise auch an Zeigerinstrumenten verwendet werden, insbesondere um deren analoge Zeigeranzeige und dadurch beispielsweise eine durch das Zeigerinstrument gemessene physikalische Größe automatisch und kontaktlos, insbesondere digital, auslesen zu können. Hierzu ist es lediglich erforderlich, dass das Zeigerinstrument immobil ist, d. h. fest installiert ist, und dass der Beschleunigungssensor auf die oben beschriebene Weise am Zeiger oder an der fest mit dem Zeiger verbundenen Zeigerwelle befestigt ist und die Leseeinheit zum Auslesen des Beschleunigungssensors vorgesehen ist. Beispielsweise kann dann im mit der Leseeinheit verbundenen Steuercomputer die Zeigerposition auf die beschriebene Weise aus den erfassten aus der Erdbeschleunigung resultierenden Beschleunigungswerten des Beschleunigungssensors ermittelt werden und daraus ein jeweils vorliegender Wert der gemessenen physikalischen Größe ermittelt werden. Der Steuercomputer kann dann beispielsweise in Abhängigkeit von der ermittelten Zeigerposition und/oder vom jeweils vorliegenden Wert der gemessenen physikalischen Größe vorgegebene Maßnahmen einleiten, zum Beispiel eine Anlage steuern oder eine Warnung ausgeben.

Bei der beschriebenen Lösung, sowohl bezüglich der Turmuhr als auch bezüglich des Zeigerinstruments, liegt der Hauptgesichtspunkt darin, die Erdgravitation und somit die Erdbeschleunigung g von 9,81 m/s² als Referenzgröße zu nutzen, insbesondere bei vorzugsweise senkrecht stehenden Zifferblättern. Das Zifferblatt sollte insbesondere dann senkrecht stehen, wenn der Beschleunigungssensor als 2D-Beschleunigungssensor ausgebildet ist.

Wesentlich für die beschriebene Lösung ist, dass der Beschleunigungssensor direkt mit dem Zeiger oder mit einer direkt gekoppelten Uhrenwelle oder Zeigerwelle oder mit einem anderen direkt, insbesondere drehfest, mit dem Zeiger verbundenen Teil mechanisch fest verbunden ist und drahtlos ausgelesen wird, mittels der Leseeinheit. Auslesen des Beschleunigungssensors bedeutet dabei insbesondere, dass das Zeigerpositionssignal, beinhaltend insbesondere einen Beschleunigungsvektor bzw. bei senkrechtstehendem Zifferblatt mindestens zwei Beschleunigungskomponenten, also mindestens von den beiden Beschleunigungssensoreinheiten gemessene Beschleunigungswerte, und beispielsweise zusätzlich eine Sensor-ID, d. h. eine Sensoridentifikation des Beschleunigungssensors vom Beschleunigungssensor an die Leseeinheit übertragen werden. Die Sensor-ID ist insbesondere dann wichtig, wenn mehrere Beschleunigungssensoren durch dieselbe Leseeinheit ausgelesen werden.

Die Uhrzeit wird bei der beschriebenen Lösung als Korrekturgröße eingestellt, also nicht zeitsynchron wie mittels Uhrwerken gemäß dem Stand der Technik, sondern aus der Differenz der realen Zeit gemäß dem Zeitsignal zur ermittelten tatsächlich vorliegenden Zeigerposition. Damit werden alle anderen Einflussgrößen oder Störgrößen eliminiert.

Abweichungen der Sensorkennlinie beispielsweise über die Langzeit oder die Temperatur werden vorteilhafterweise durch eine Eigenkalibrierungsprozedur kompensiert. Voraussetzung ist, dass der Beschleunigungssensor mindestens eine 180°-Drehung im konstanten Erdgravitationsfeld ausführt und die Gravitationskonstante am jeweiligen Erd-Punkt dann als Kalibrierreferenz benutzt werden kann. Dafür ist es notwendig die maximale und minimale Beschleunigung des jeweiligen Beschleunigungssensors, insbesondere der jeweiligen Beschleunigungssensoreinheit des Beschleunigungssensors, bei einem Umlauf zu bestimmen und den daraus ermittelten Kalibrierwert in den Beschleunigungssensor, insbesondere in die jeweilige Beschleunigungssensoreinheit des Beschleunigungssensors, oder beispielsweise in das Gesamtsystem der Turmuhr oder in die Leseeinheit oder in den Steuercomputer zu programmieren.

Es ist insbesondere vorgesehen, dass das, was oben bezüglich des ersten Zeigers beschrieben wurde, insbesondere hinsichtlich der Bestimmung der Zeigerposition mittels des Beschleunigungssensors, auch für den zweiten Zeiger und, wenn vorhanden, auch für den dritten Zeiger gilt. Durch Anwendung des RFID-Antikollisionsprinzips und der eindeutigen Zeigeridentifikation, d. h. der eindeutigen Identifikation des dem jeweiligen Zeiger zugeordneten Beschleunigungssensors, können alle Beschleunigungssensoren mit derselben RFID-Leseeinheit ausgelesen werden.

Wie bereits erwähnt, wird bei der hier beschriebenen Lösung die Uhrzeit als Korrekturgröße eingestellt, also nicht zeitsynchron wie beim Stand der Technik, sondern aus der Differenz der realen Uhrzeit gemäß Zeitsignal zur ermittelten Zeigerposition gemäß Zeigerpositionssignal.

Vorteilhafterweise wird für die gesamte Steuerung dieser asynchronen Uhr der, insbesondere programmierbare, Steuercomputer, insbesondere in Form eines Controllers, verwendet. Der Steuercomputer läuft ununterbrochen, d. h. dauerhaft, für die Zeit des Uhrenbetriebes. Er führt ein der beschriebenen Lösung entsprechendes Programm aus, welches insbesondere das Verfahren zum Betrieb der Turmuhr umsetzt.

In diesem Verfahren zum Betrieb der Turmuhr werden nach dem Start des Steuercomputers beispielsweise zunächst übliche Setups zum Betriebssystem ausgeführt und insbesondere wird auch die Zeitsynchronisation des Steuercomputers ausgeführt, die als Referenzzeit (Realzeit), d. h. als Zeitsignal, dient. Diese Zeit kann eine interne Quarzuhr des Steuercomputers, der Zeitzeichensender DCF77, die Internetzeit oder die Zeitreferenz eines GPS-Satelliten sein.

Ist dies erfolgreich geschehen, werden vorteilhafterweise die Daten des Beschleunigungssensors ausgelesen und die jeweilige Zeigerposition in Grad, Stunden, Minuten oder Sekunden berechnet und mit der Realzeit, d. h. mit der Uhrzeit gemäß Zeitsignal, verglichen. Ergibt sich eine Differenz, wird aus dieser, insbesondere entsprechend einem Übersetzungsverhältnisses des Uhrengetriebes, welches im mechanischen Wandler angeordnet ist, und der Winkelschrittweiten des Schrittmotors die Schrittanzahl des Schrittmotors vor oder zurück berechnet. Übersetzungsverhältnis und Winkelschrittweite sind dabei vorteilhafterweise einstellbare Parameter des Programmes. Sie erlauben damit die variable Anwendung des Programms auf unterschiedliche Hardwarekomponenten von Turmuhren.

Das Lesen des Beschleunigungssensors und die Ansteuerung des Schrittmotors wird solange und sooft ausgeführt, bis das vorgegebene Limit erreicht wird. Das Limit wird insbesondere in Abhängigkeit einer jeweiligen Auflösung der Zeigerposition auf dem Zifferblatt vorgegeben. Je höher die Auflösung auf dem Zifferblatt ist, desto geringer sollte das Limit vorgegeben werden, da eine Abweichung dann stärker auffällt als bei einer geringen Auflösung des Zifferblatts.

Dieses Limit ist vorteilhafterweise ein Wahlparameter des Programmes. Idealerweise erreicht die Steuerung mit einer Programmschleife dieses Limit. D. h. die Abweichung der tatsächlich vorliegenden Zeigerposition von der Zeigerposition, die gemäß Zeitsignal vorliegen müsste, und die daraus resultierenden Schritte des Schrittmotors werden vorteilhafterweise so berechnet, dass die Zeigerposition nach der Ansteuerung des Schrittmotors und der Ausführung der berechneten Schritte innerhalb des Limits liegt.

Vorteilhafterweise wird die tatsächlich vorliegende Zeigerposition danach erneut ermittelt und deren Abweichung von der Zeigerposition, die gemäß Zeitsignal vorliegen müsste, erneut überprüft. Liegt die tatsächlich vorliegende Zeigerposition außerhalb des Limits, werden erneut die erforderlichen Schritte des Schrittmotors berechnet und der Schrittmotor entsprechend angesteuert, um die berechneten Schritte auszuführen. Dies wird vorteilhafterweise sooft wiederholt, bis die tatsächlich vorliegende Zeigerposition im vorgegebenen Limit liegt. Idealerweise ist dies jedoch bereits nach der ersten Zeigerverstellung mittels des Schrittmotors bereits der Fall, so dass keine Wiederholungen erforderlich sind.

Dieser Prozess wird in vorgegebenen, vorteilhafterweise einstellbaren, Zeitintervallen, beispielsweise alle 30 Sekunden, wiederholt. Dieses Zeitintervall ist für Turmuhren ausreichend, um eine vertretbare Genauigkeit der Zeitanzeige zu erreichen, insbesondere wenn die Turmuhr keinen Sekundenzeiger aufweist, sondern nur einen Minutenzeiger und Stundenzeiger. Durch dieses Zeitintervall kann eine Energieeinsparung erreicht werden. Die beschriebene Lösung arbeitet somit sehr energiesparend. Der Schrittmotor als energieintensivstes Element wird vorteilhafterweise im Tastverhältnis von ca. 1:50 bis 1: 100 betrieben.

Alle Mess- und Stellgrößen, d. h. insbesondere ausgeführte Schritte des Schrittmotors sowie die ermittelten Zeigerpositionssignale und/oder die daraus ermittelten Zeigerpositionen, werden vorteilhafterweise in einem nichtflüchtigen Datenspeicher abgelegt und sind somit für eine Datenanalyse verfügbar, insbesondere für die Routine der Selbstkalibrierung des Beschleunigungssensors. Der Beschleunigungssensor weist vorteilhafterweise eine einfache Möglichkeit auf, Kalibrierkonstanten einzutragen.

Um nicht aufwendig kalibrierte Beschleunigungssensoren einsetzen zu müssen, wird, insbesondere als Bestandteil des Verfahrens zum Betrieb der Turmuhr, beispielsweise eine Routine zu Selbstkalibrierung durchgeführt, die kontinuierlich, insbesondere zyklisch, beim Betrieb der Turmuhr und/oder bei der Erstinstallation durchgeführt wird.

Bei der Erstinstallation wird beispielsweise im Programm eine Selbstkalibrierfunktion aufgerufen, die zunächst eine mindestens 360°-Umdrehung des ersten Zeigers oder des jeweiligen Zeigers ausführt, um die Maximal- und Minimalbeschleunigungen zu bestimmen, aus der bekannterweise die Kalibrierkonstanten für den jeweiligen Beschleunigungssensor, insbesondere für dessen Beschleunigungssensoreinheiten, ermittelt werden. Ist dies einmal durchlaufen und wurden sinnvolle Größen ermittelt, kann der normale Uhrenbetrieb beginnen.

Vorteilhaft ist, dass diese Kalibrierungsroutine bei jedem Zeigerumlauf im normalen Uhrbetrieb erneut durchgeführt werden kann, ohne abweichend vom normalen Uhrbetrieb erneut eine spezielle 360°-Umdrehung des Zeigers ausführen zu müssen, da alle Messwerte zur Ermittlung der Maximal- und Minimalbeschleunigungen bei zum Beispiel einem stündlichen Umlauf des Minutenzeigers, wie oben beschrieben, in dem Datenspeicher vorliegen.

Dieses Vorgehen führt insbesondere auch dazu, dass Temperatureinflüsse auf den Beschleunigungssensor automatisch kompensiert werden. Es ist davon auszugehen, dass große Temperaturschwankungen an Turmuhren langsamer als eine Stunde verlaufen. Die Kalibrierwerte aus der Messung im Minutenzeiger können erfahrungsgemäß bei Verwendung gleicher Beschleunigungssensoren aus gleicher Fertigungsserie auch auf den Beschleunigungssensor des Stundenzeigers übernommen werden.

Ausführungsbeispiele der Erfindung werden im Folgenden anhand von Zeichnungen näher erläutert.

Darin zeigen:
- Figur 1: schematisch eine Ausführungsform einer Turmuhr,
- Figur 2: schematisch eine weitere Ausführungsform,
- Figur 3: schematisch eine weitere Ausführungsform,
- Figur 4: schematisch eine Darstellung einer Anordnungsmöglichkeit eines Beschleunigungssensors und einer Leseeinheit,
- Figur 5: schematisch eine Darstellung einer weiteren Anordnungsmöglichkeit des Beschleunigungssensors und der Leseeinheit,
- Figur 6: schematisch einen Programmablaufplan eines Verfahrens zum Betrieb der Turmuhr, und
- Figur 7: schematisch einen Programmablaufplan einer Sensorselbstkalibrierung.

Einander entsprechende Teile sind in allen Figuren mit den gleichen Bezugszeichen versehen.

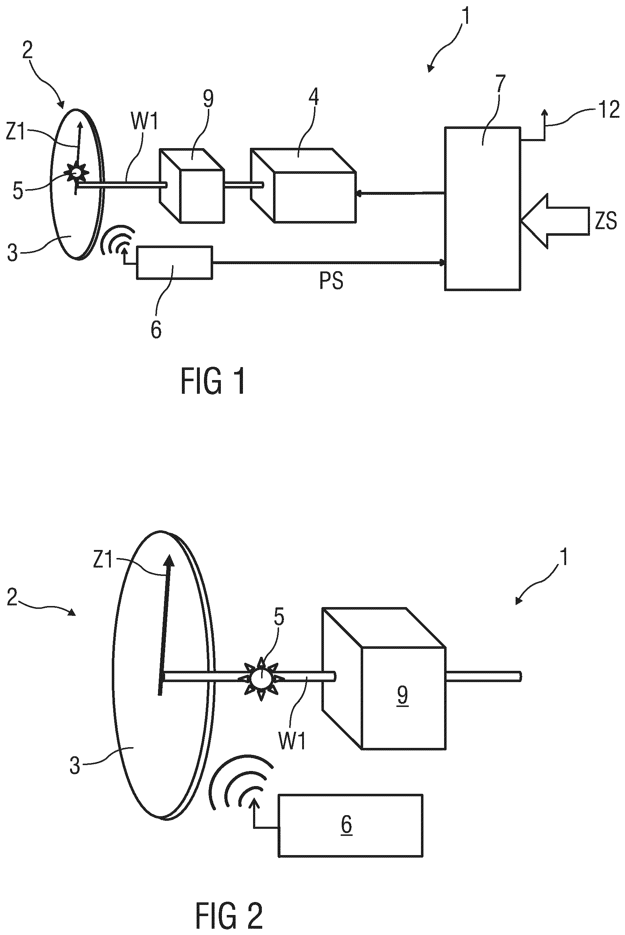

Anhand der Figuren 1 bis 7 werden im Folgenden eine Turmuhr 1 und ein Verfahren zu deren Betrieb beschrieben.

Die Turmuhr 1 weist eine Uhrzeitanzeigeeinheit 2 mit einem Zifferblatt 3 und mindestens zwei Zeigern auf. In den dargestellten Beispielen ist jeweils nur der erste Zeiger Z1 dargestellt, der insbesondere ein Minutenzeiger ist. Der nicht dargestellte zweite Zeiger ist dann insbesondere ein Stundenzeiger.

Die Turmuhr 1 weist des Weiteren einen Schrittmotor 4 auf, der mit dem ersten Zeiger Z1 über eine erste Uhrenwelle W1 verbunden ist. Die erste Uhrenwelle W1 ist dabei fest mit dem ersten Zeiger Z1 verbunden. Der Schrittmotor 4 ist in den Figuren 2, 4 und 5 nicht dargestellt.

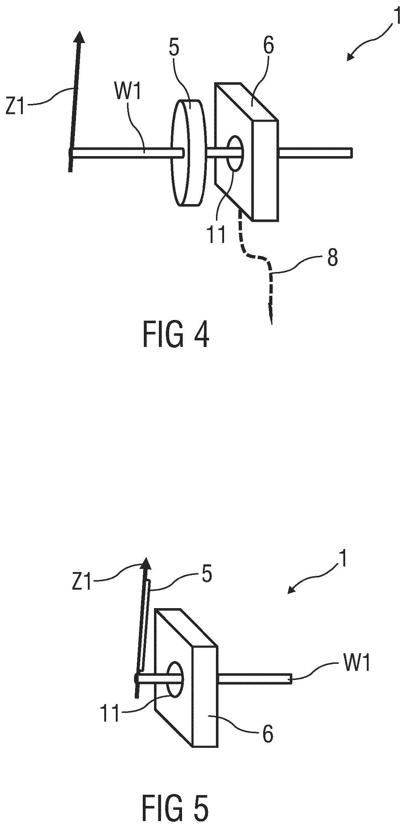

Die Turmuhr 1 weist zudem einen als 2D-Beschleunigungssensor oder als 3D-Beschleunigungssensor ausgebildeten Beschleunigungssensor 5 auf, der an dem ersten Zeiger Z1 befestigt ist, wie in den Figuren 1 und 5 beispielhaft gezeigt, oder an der ersten Uhrenwelle W1 befestigt ist, wie in den Figuren 2 bis 4 beispielhaft gezeigt.

Der Beschleunigungssensor 5 ist als ein passiver RFID-Sensortransponder ausgebildet. Dieser Beschleunigungssensor 5 ermöglicht es, über einen Bezug zur Erdbeschleunigung g von 9,81 m/s² in zwei bzw. drei Dimensionen, d. h. in den Achsenrichtungen eines zweidimensionalen bzw. dreidimensionalen Koordinatensystems, seine Ausrichtung, d. h. insbesondere die Neigungs- bzw. Winkelposition, zu bestimmen. Da der Beschleunigungssensor 5 am ersten Zeiger Z1 oder an der ersten Uhrenwelle W1 befestigt ist, kann darüber auch die Ausrichtung des ersten Zeigers Z1 und somit eine jeweils tatsächlich vorliegende Zeigerposition des ersten Zeigers Z1 ermittelt werden.

Die Turmuhr 1 weist des Weiteren eine Leseeinheit 6 zum kontaktlosen Auslesen des Beschleunigungssensors 5 auf. Die Leseeinheit 6 ist als eine RFID-Leseeinheit zum Auslesen des als RFID-Sensortransponder ausgebildeten Beschleunigungssensors 5 ausgebildet. Die Leseeinheit 6 ist derart angeordnet, dass sie sich jederzeit, d. h. in jeder Position des Beschleunigungssensors 5, in Auslesereichweite zum Beschleunigungssensor 5 befindet. Die Leseeinheit 6 ist insbesondere feststehend angeordnet.

Zudem weist die Turmuhr 1 einen mit der Leseeinheit 6 und mit dem Schrittmotor 4 gekoppelten Steuercomputer 7 auf (nur dargestellt in Figur 1), der ausgebildet ist zum Empfangen eines Zeitsignals ZS, zum Empfangen eines durch die Leseeinheit 6 ausgelesenen Zeigerpositionssignals PS des Beschleunigungssensors 5 und zur Ansteuerung des Schrittmotors 4 in Abhängigkeit vom Zeitsignal ZS und vom Zeigerpositionssignal PS. Die Leseeinheit 6 ist insbesondere über ein beispielhaft in Figur 4 gezeigtes Kabel 8 mit dem Steuercomputer 7 gekoppelt.

Das Zeigerpositionssignal PS des Beschleunigungssensors 5 beinhaltet insbesondere eine Aussage bezüglich der jeweils vorliegenden Zeigerposition des ersten Zeigers Z1, insbesondere in Form von aus der Einwirkung der Erdbeschleunigung auf den Beschleunigungssensor 5 resultierenden Beschleunigungswerten in zwei oder drei Dimensionen bzw. in Form von dazu korrespondierenden Sensorwerten. Es ist insbesondere vorgesehen, dass der Steuercomputer 7 aus diesem Zeigerpositionssignal PS die tatsächlich vorliegende Zeigerposition ermittelt. Der Schrittmotor 4 wird dann durch den Steuercomputer 7 in Abhängigkeit vom Zeitsignal ZS und von der mittels des Zeigerpositionssignals PS ermittelten tatsächlich vorliegenden Zeigerposition angesteuert, wenn diese tatsächlich vorliegende Zeigerposition von einer dem Zeitsignal ZS entsprechenden Zeigerposition abweicht, zumindest dann, wenn diese Abweichung über einem vorgegebenen Limit liegt.

In einem Verfahren zum Betrieb der Turmuhr 1 ist somit insbesondere vorgesehen, dass in vorgegebenen Zeitintervallen von beispielsweise 30 Sekunden jeweils das Zeigerpositionssignal PS ausgelesen wird, daraus im Steuercomputer 7 eine tatsächlich vorliegende Zeigerposition ermittelt wird, die ermittelte tatsächlich vorliegende Zeigerposition im Steuercomputer 7 mit einer dem Zeitsignal ZS entsprechenden Zeigerposition verglichen wird, bei einer über einem vorgegebenen Limit liegenden Abweichung der ermittelten tatsächlich vorliegenden Zeigerposition von der dem Zeitsignal ZS entsprechenden Zeigerposition durch den Steuercomputer 7 eine der Abweichung entsprechende Anzahl von Schritten des Schrittmotors 4 berechnet wird, und der Schrittmotor 4 durch den Steuercomputer 7 zur Ausführung der berechneten Anzahl der Schritte angesteuert wird.

Vorteilhafterweise ist eine Basisroutine zur Selbstkalibrierung SK des Beschleunigungssensors 5 bei einem jeweiligen 360°-Zeigerumlauf vorgesehen. Das Referenzsignal ist dabei die Erdbeschleunigung g von 9,81 m/s². Dadurch werden insbesondere eine Alterung des Beschleunigungssensors 5 und eine temperaturabhängige Übertragungsfunktion ausgeglichen.

Die Turmuhr 1 weist beispielsweise einen mechanischen Wandler 9 auf, über welchen der Schrittmotor 4 mit der ersten Uhrenwelle W1 verbunden ist, wie beispielhaft in den Figuren 1 und 2 gezeigt.

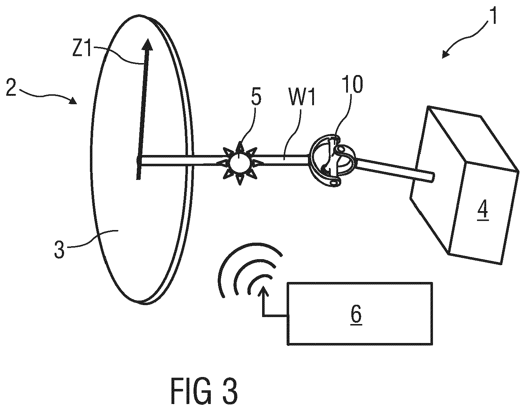

Die Turmuhr 1 kann ein Kardangelenk 10 zwischen der ersten Uhrenwelle W1 und einer Ausgangswelle des Schrittmotors 4 oder des mechanischen Wandlers 9 aufweisen, wie beispielhaft in Figur 3 gezeigt.

Wie beispielhaft in den Figuren 4 und 5 gezeigt, kann die Leseeinheit 6 eine Durchführungsöffnung 11 für die erste Uhrenwelle W1 aufweisen und koaxial zur ersten Uhrenwelle W1 angeordnet sein, wobei die Durchführungsöffnung 11 einen größeren Durchmesser aufweist als die durch die Durchführungsöffnung 11 hindurchgeführt angeordnete erste Uhrenwelle W1. Dies ist eine bauliche Form der Leseeinheit 6 zur optimalen Montage im Bereich der ersten Uhrenwelle W1.

Wie beispielhaft in Figur 5 gezeigt, kann der Beschleunigungssensor 5 länglich ausgebildet und/oder in einem länglichen Gehäuse angeordnet und am ersten Zeiger Z1 angeordnet sein. Dies ist eine bauliche Form des Beschleunigungssensors 5 zur optimalen Montage an Standardzeigern von Turmuhren 1. Beispielsweise weist der Beschleunigungssensor 5 und/oder dessen Gehäuse eine Länge von 2 cm bis 15 cm auf. Der RFID-Sensortransponder ist beispielsweise ein UHF- RFID-Sensortransponder mit Dipolantenne auf Lamda-Halbe oder Lamda-Viertel bezüglich der Wellenlänge des Radiosignals, insbesondere des Zeigerpositionssignals PS.

Wie beispielhaft in Figur 4 gezeigt, kann der Beschleunigungssensor 5 alternativ auch rund ausgebildet und/oder in einem runden Sensorgehäuse angeordnet sein und koaxial zur ersten Uhrenwelle W1 an der ersten Uhrenwelle W1 befestigt sein. Dies ist eine bauliche Form des Beschleunigungssensors 5 zur optimalen Montage an der fest mit dem ersten Zeiger Z1 verbundenen ersten Uhrenwelle W1.

In einer Ausführungsform ist der mechanische Wandler 9 über eine zweite Uhrenwelle mit dem zweiten Zeiger verbunden, wobei die erste Uhrenwelle W1 und die zweite Uhrenwelle im mechanischen Wandler 9 über ein Getriebe miteinander gekoppelt sind. Bei dieser Ausführungsform wird somit nur der erste Zeiger Z1, beispielsweise der Minutenzeiger, direkt durch den Schrittmotor 4 verstellt. Der zweite Zeiger, beispielsweise der Stundenzeiger, wird dann über die Verstellung des ersten Zeigers Z1 mit verstellt.

Weist die Uhrzeitanzeigeeinheit 2 drei Zeiger auf, ist der mechanische Wandler 9 vorteilhafterweise über die zweite Uhrenwelle mit dem zweiten Zeiger und über die dritte Uhrenwelle mit dem dritten Zeiger verbunden, wobei die erste Uhrenwelle W1, die zweite Uhrenwelle und die dritte Uhrenwelle im mechanischen Wandler 9 über das Getriebe miteinander gekoppelt sind. Bei dieser Ausführungsform wird somit nur der erste Zeiger Z1, beispielsweise der Sekundenzeiger, direkt durch den Schrittmotor 4 verstellt. Der zweite Zeiger und der dritte Zeiger, beispielsweise der Minutenzeiger und der Stundenzeiger, werden dann über die Verstellung des ersten Zeigers Z1 mit verstellt.

Der Steuercomputer 7 ist beispielsweise über ein Datenübertragungsnetzwerk mit einem Zeitsignalgeber (NTP-Server) und/oder mit einem Betreiberserver verbunden, in Figur 1 schematisch angedeutet durch einen Netzwerkausgang 12 am Steuercomputer 7. Diese Lösung ermöglicht im Zeitalter der Digitalisierung eine praktische und einfache Fernwartung durch die Netzwerkfähigkeit.

Abweichungen der Sensorkennlinie beispielsweise über die Langzeit oder die Temperatur werden vorteilhafterweise durch eine Eigenkalibrierungsprozedur kompensiert. Voraussetzung ist, dass der Beschleunigungssensor 5 mindestens eine 180°-Drehung im konstanten Erdgravitationsfeld ausführt und die Gravitationskonstante am jeweiligen Erd-Punkt dann als Kalibrierreferenz benutzt werden kann. Dafür ist es notwendig die maximale und minimale Beschleunigung des jeweiligen Beschleunigungssensors 5, insbesondere der jeweiligen Beschleunigungssensoreinheit des Beschleunigungssensors 5, bei einem Umlauf zu bestimmen und den daraus ermittelten Kalibrierwert in den Beschleunigungssensor 5, insbesondere in die jeweilige Beschleunigungssensoreinheit des Beschleunigungssensors 5, oder beispielsweise in das Gesamtsystem der Turmuhr oder in die Leseeinheit 6 oder in den Steuercomputer 7 zu programmieren.

Es ist insbesondere vorgesehen, dass das, was oben bezüglich des ersten Zeigers Z1 beschrieben wurde, insbesondere hinsichtlich der Bestimmung der Zeigerposition mittels des Beschleunigungssensors 5, auch für den zweiten Zeiger und, wenn vorhanden, auch für den dritten Zeiger gilt. Durch Anwendung des RFID-Antikollisionsprinzips und der eindeutigen Zeigeridentifikation, d. h. der eindeutigen Identifikation des dem jeweiligen Zeiger zugeordneten Beschleunigungssensors 5, können alle Beschleunigungssensoren 5 mit derselben RFID-Leseeinheit ausgelesen werden.

Vorteilhafterweise wird für die gesamte Steuerung dieser asynchronen Uhr der, insbesondere programmierbare, Steuercomputer 7, insbesondere in Form eines Controllers, verwendet. Der Steuercomputer 7 läuft ununterbrochen, d. h. dauerhaft, für die Zeit des Uhrenbetriebes. Er führt ein der beschriebenen Lösung entsprechendes Programm aus, welches insbesondere das Verfahren zum Betrieb der Turmuhr 1 umsetzt.

In diesem Verfahren zum Betrieb der Turmuhr 1 werden nach dem Start des Steuercomputers 7 beispielsweise zunächst übliche Setups zum Betriebssystem ausgeführt und insbesondere wird auch die Zeitsynchronisation des Steuercomputers 7 ausgeführt, die als Referenzzeit (Realzeit), d. h. als Zeitsignal ZS, dient. Diese Zeit kann eine interne Quarzuhr des Steuercomputers 7, der Zeitzeichensender DCF77, die Internetzeit oder die Zeitreferenz eines GPS-Satelliten sein.

Ist dies erfolgreich geschehen, werden vorteilhafterweise die Daten des Beschleunigungssensors 5 ausgelesen und die jeweilige Zeigerposition in Grad, Stunden, Minuten oder Sekunden berechnet und mit der Realzeit, d. h. mit der Uhrzeit gemäß Zeitsignal ZS, verglichen. Ergibt sich eine Differenz, wird aus dieser, insbesondere entsprechend einem Übersetzungsverhältnisses des Uhrengetriebes, welches im mechanischen Wandler 9 angeordnet ist, und der Winkelschrittweiten des Schrittmotors 4 die Schrittanzahl des Schrittmotors 4 vor oder zurück berechnet. Übersetzungsverhältnis und Winkelschrittweite sind dabei vorteilhafterweise einstellbare Parameter des Programmes. Sie erlauben damit die variable Anwendung des Programms auf unterschiedliche Hardwarekomponenten von Turmuhren 1.

Das Lesen des Beschleunigungssensors 5 und die Ansteuerung des Schrittmotors 4 wird solange und sooft ausgeführt, bis das vorgegebene Limit erreicht wird. Das Limit wird insbesondere in Abhängigkeit einer jeweiligen Auflösung der Zeigerposition auf dem Zifferblatt 3 vorgegeben.

Dieses Limit ist vorteilhafterweise ein Wahlparameter des Programmes. Idealerweise erreicht die Steuerung mit einer Programmschleife dieses Limit. D. h. die Abweichung der tatsächlich vorliegenden Zeigerposition von der Zeigerposition, die gemäß Zeitsignal ZS vorliegen müsste, und die daraus resultierenden Schritte des Schrittmotors 4 werden vorteilhafterweise so berechnet, dass die tatsächlich vorliegende Zeigerposition nach der Ansteuerung des Schrittmotors 4 und der Ausführung der berechneten Schritte innerhalb des Limits liegt.

Vorteilhafterweise wird die tatsächlich vorliegende Zeigerposition danach erneut ermittelt und deren Abweichung von der Zeigerposition, die gemäß Zeitsignal ZS vorliegen müsste, erneut überprüft. Liegt die tatsächlich vorliegende Zeigerposition außerhalb des Limits, werden erneut die erforderlichen Schritte des Schrittmotors 4 berechnet und der Schrittmotor 4 entsprechend angesteuert, um die berechneten Schritte auszuführen. Dies wird vorteilhafterweise sooft wiederholt, bis die tatsächlich vorliegende Zeigerposition im vorgegebenen Limit liegt. Idealerweise ist dies jedoch bereits nach der ersten Zeigerverstellung mittels des Schrittmotors 4 bereits der Fall, so dass keine Wiederholungen erforderlich sind.

Dieser Prozess wird in vorgegebenen, vorteilhafterweise einstellbaren, Zeitintervallen, beispielsweise alle 30 Sekunden, wiederholt. Dieses Zeitintervall ist für Turmuhren 1 ausreichend, um eine vertretbare Genauigkeit der Zeitanzeige zu erreichen, insbesondere wenn die Turmuhr 1 keinen Sekundenzeiger aufweist, sondern nur einen Minutenzeiger und Stundenzeiger. Durch dieses Zeitintervall kann eine Energieeinsparung erreicht werden. Die beschriebene Lösung arbeitet somit sehr energiesparend. Der Schrittmotor 4 als energieintensivstes Element wird vorteilhafterweise im Tastverhältnis von ca. 1:50 bis 1: 100 betrieben.

Alle Mess- und Stellgrößen, d. h. insbesondere ausgeführte Schritte des Schrittmotors 4 sowie die ermittelten Zeigerpositionssignale PS und/oder die daraus ermittelten Zeigerpositionen, werden vorteilhafterweise in einem nichtflüchtigen Datenspeicher abgelegt und sind somit für eine Datenanalyse verfügbar, insbesondere für die Routine der Selbstkalibrierung SK des Beschleunigungssensors 5. Der Beschleunigungssensor 5 weist vorteilhafterweise eine einfache Möglichkeit auf, Kalibrierkonstanten einzutragen.

Um nicht aufwendig kalibrierte Beschleunigungssensoren 5 einsetzen zu müssen, wird, insbesondere als Bestandteil des Verfahrens zum Betrieb der Turmuhr 1, beispielsweise eine Routine zu Selbstkalibrierung SK durchgeführt, die kontinuierlich, insbesondere zyklisch, beim Betrieb der Turmuhr 1 und/oder bei der Erstinstallation durchgeführt wird.

Bei der Erstinstallation wird beispielsweise im Programm eine Selbstkalibrierfunktion aufgerufen, die zunächst eine mindestens 360°-Umdrehung des ersten Zeigers Z1 oder des jeweiligen Zeigers ausführt, um die Maximal- und Minimalbeschleunigungen zu bestimmen, aus der bekannterweise die Kalibrierkonstanten für den jeweiligen Beschleunigungssensor 5, insbesondere für dessen Beschleunigungssensoreinheiten, ermittelt werden. Ist dies einmal durchlaufen und wurden sinnvolle Größen ermittelt, kann der normale Uhrenbetrieb beginnen.

Vorteilhaft ist, dass diese Kalibrierungsroutine bei jedem Zeigerumlauf im normalen Uhrbetrieb erneut durchgeführt werden kann, ohne abweichend vom normalen Uhrbetrieb erneut eine spezielle 360°-Umdrehung des Zeigers ausführen zu müssen, da alle Messwerte zur Ermittlung der Maximal- und Minimalbeschleunigungen bei zum Beispiel einem stündlichen Umlauf des Minutenzeigers, wie oben beschrieben, in dem Datenspeicher vorliegen.

Dieses Vorgehen führt insbesondere auch dazu, dass Temperatureinflüsse auf den Beschleunigungssensor 5 automatisch kompensiert werden. Es ist davon auszugehen, dass große Temperaturschwankungen an Turmuhren 1 langsamer als eine Stunde verlaufen. Die Kalibrierwerte aus der Messung im Minutenzeiger können erfahrungsgemäß bei Verwendung gleicher Beschleunigungssensoren 5 aus gleicher Fertigungsserie auch auf den Beschleunigungssensor 5 des Stundenzeigers übernommen werden.

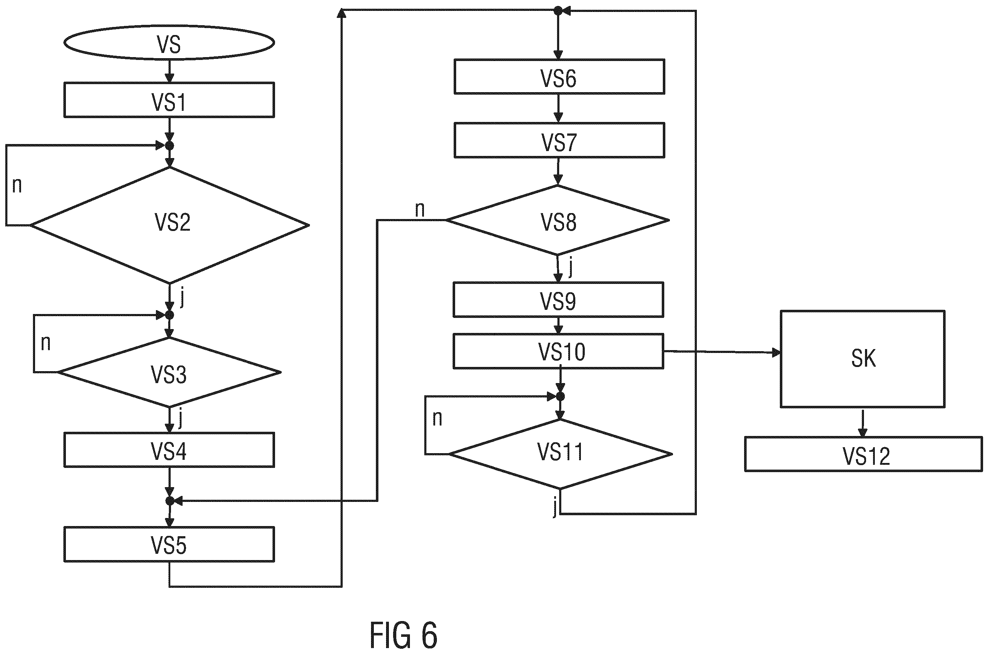

Im Folgenden wird anhand des Programmablaufplans gemäß Figur 6 ein Ablauf einer Ausführungsform des Verfahrens zum Betrieb der Turmuhr 1 beschrieben.

In der dargestellten Ausführungsform wird nach einem Verfahrensstart VS in einem ersten Verfahrensschritt VS1 der Steuercomputer 7 gestartet.

In einem zweiten Verfahrensschritt VS2 werden der Systemzustand und die Zeitsynchronisation des Steuercomputers 7 getestet. Werden dabei Probleme erkannt, gekennzeichnet mit dem Bezugszeichen n für nein, wird dieser zweite Verfahrensschritt VS2 wiederholt.

Ist alles in Ordnung, gekennzeichnet mit dem Bezugszeichen j für ja, wird in einem dritten Verfahrensschritt VS3 der Beschleunigungssensor 5 mittels der Leseeinheit 6 ausgelesen. Kann der Beschleunigungssensor 5 nicht ausgelesen werden, gekennzeichnet mit dem Bezugszeichen n, wird der dritte Verfahrensschritt VS3 wiederholt.

Wurde der Beschleunigungssensor 5 ausgelesen, gekennzeichnet mit dem Bezugszeichen j, wird in einem vierten Verfahrensschritt VS4 anhand der aus dem ausgelesenen Zeigerpositionssignal PS ermittelten tatsächlich vorliegenden Zeigerposition und anhand des Zeitsignals ZS die Anzahl der Schritte berechnet, die der Schrittmotor 4 ausführen muss, damit die tatsächlich vorliegende Zeigerposition mit der Zeigerposition gemäß Zeitsignal ZS übereinstimmt oder von dieser nur innerhalb des vorgegebenen Limits abweicht.

In einem fünften Verfahrensschritt VS5 wird der Schrittmotor 4 durch den Steuercomputer 7 angesteuert, um die berechnete Anzahl an Schritten auszuführen.

Die Verfahrensschritte VS1 bis VS4 dienen insbesondere einer erstmaligen Grundeinstellung der angezeigten Uhrzeit der Turmuhr 1. Die weiteren Verfahrensschritte VS5 bis VS12 werden dann in den Zeitintervallen von beispielsweise 30 Sekunden wiederholt, um die angezeigte Uhrzeit der Turmuhr 1 zu aktualisieren.

In einem sechsten Verfahrensschritt VS6 wird der Beschleunigungssensor 5 ausgelesen.

In einem siebten Verfahrensschritt VS7 wird anhand der aus dem ausgelesenen Zeigerpositionssignal PS ermittelten tatsächlich vorliegenden Zeigerposition und anhand des Zeitsignals ZS die Anzahl der Schritte berechnet, die der Schrittmotor 4 ausführen muss, damit die tatsächlich vorliegende Zeigerposition mit der Zeigerposition gemäß Zeitsignal ZS übereinstimmt oder von dieser nur innerhalb des vorgegebenen Limits abweicht.

In einem achten Verfahrensschritt VS8 wird ermittelt, ob das vorgegebene Limit bereits erreicht ist, d. h. ob die tatsächlich vorliegende Zeigerposition innerhalb des Limits der Abweichung zur Zeigerposition gemäß Zeitsignal ZS liegt. Ist dies nicht der Fall, gekennzeichnet mit dem Bezugszeichen n, wird das Verfahren ab dem fünften Verfahrensschritt VS5 fortgesetzt, d. h. der Schrittmotor 4 wird durch den Steuercomputer 7 angesteuert, um die berechnete Anzahl an Schritten auszuführen. Ist das vorgegebene Limit bereits erreicht, gekennzeichnet mit dem Bezugszeichen j, wird in einem neunten Verfahrensschritt VS9 ein Timer für das vorgegebene Zeitintervall gestartet.

In einem zehnten Verfahrensschritt VS10 werden die vorliegenden Istwerte, insbesondere bezüglich des Zeigerpositionssignals PS und/oder der tatsächlich vorliegenden Zeigerposition und/oder der Abweichung von der Zeigerposition gemäß Zeitsignal ZS und/oder Anzahl der durchgeführten Schritte des Schrittmotors 4, im Datenspeicher gespeichert.

In einem elften Verfahrensschritt VS11 wird überprüft, ob das nächste Zeitintervall bereits erreicht ist. Wenn nein, gekennzeichnet mit dem Bezugszeichen n, wird diese Überprüfung im elften Verfahrensschritt VS11 erneut durchgeführt. Wenn ja, gekennzeichnet mit dem Bezugszeichen j, wird das Verfahren ab dem sechsten Verfahrensschritt VS6 fortgesetzt.

Das vorgegebene Limit der Abweichung der tatsächlich vorliegenden Zeigerposition von der Zeigerposition gemäß Zeitsignal ZS beträgt beispielsweise ein Grad, insbesondere beim als Minutenzeiger ausgebildeten ersten Zeiger Z1. Dies entspricht dann einer Abweichung von 10 Sekunden.

Das Zeitintervall beträgt beispielsweise 30 Sekunden, wie bereits erwähnt.

Die Steuercomputerzeit, d. h. die Zeit, welche der Steuercomputer 7 verwendet, insbesondere auch für das Zeitsignal ZS, entspricht insbesondere der Echtzeit.

Das Auslesen des Beschleunigungssensors 5 bedeutet insbesondere die Bestimmung der Zeigerneigung und somit der Zeigerposition und somit die Berechnung der Ist-Minutenposition beim Minutenzeiger bzw. der Ist-Stundenposition beim Stundenzeiger.

Die Berechnung der Schritte des Schrittmotors 4 dient der gezielten Ansteuerung des Schrittmotors 4 zum Ausgleich der Ist-Zeigerposition, d. h. der ermittelten momentan tatsächlich vorliegenden Zeigerposition gemäß dem ausgelesenen Zeigerpositionssignal PS, zur Echtzeit, d. h. zur Zeigerposition gemäß dem Zeitsignal ZS.

Die im zehnten Verfahrensschritt VS10 im Datenspeicher gespeicherten Istwerte können, wie oben bereits beschrieben, für die Routine der Selbstkalibrierung SK des Beschleunigungssensors 5 verwendet werden. In einem zwölften Verfahrensschritt VS12 werden ermittelte Kalibrierwerte in den Beschleunigungssensor 5 geschrieben.

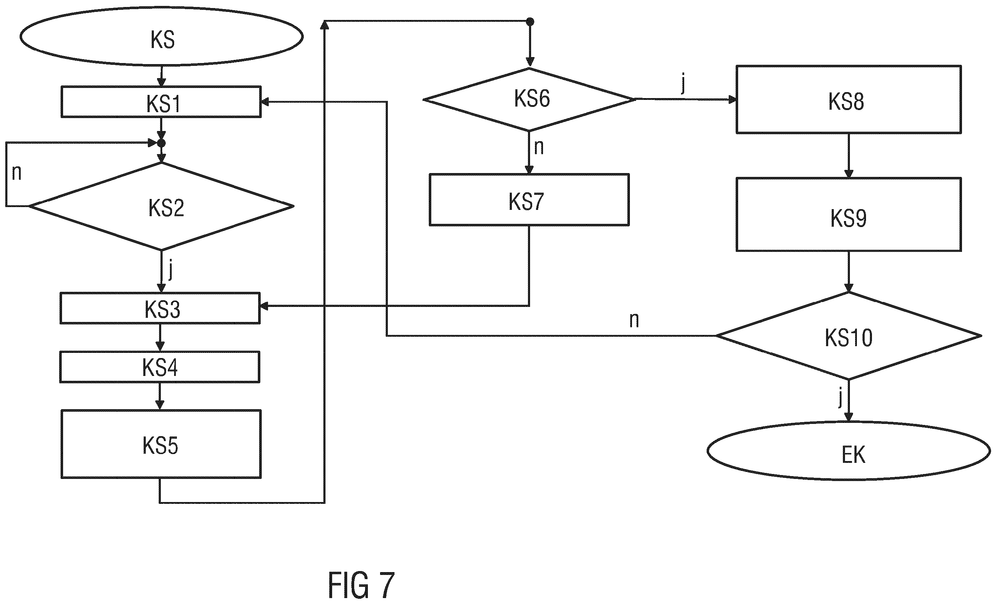

Figur 7 zeigt einen Programmablaufplan eines Ablaufs einer Ausführungsform eines Selbstkalibrierungsverfahrens, welches bei einer Erstinstallation eines Beschleunigungssensors 5 an der Turmuhr 1 durchgeführt wird und durch welches dieser Beschleunigungssensor 5 kalibriert wird. Durch dieses Selbstkalibrierungsverfahren wird es ermöglicht, auf aufwendig vorher kalibrierte Beschleunigungssensoren 5 zu verzichten und stattdessen zunächst unkalibrierte Beschleunigungssensoren 5 an der Turmuhr 1 zu installieren, welche dann anschließend mittels des Selbstkalibrierungsverfahrens kalibriert werden.

Nach einem Kalibrierstart KS wird in einem ersten Kalibrierschritt KS 1 der Steuercomputer 7 gestartet.

In einem zweiten Kalibrierschritt KS2 wird der Beschleunigungssensor 5 durch die Leseeinheit 6 ausgelesen und überprüft, ob der Beschleunigungssensor 5 relevante Werte, insbesondere ein relevantes Zeigerpositionssignal PS, liefert. Wenn nein n, dann wird der zweite Kalibierschritt KS2 wiederholt. Wenn ja j, dann wird der Beschleunigungssensor 5 in einem dritten Kalibrierschritt KS3 durch die Leseeinheit 6 ausgelesen. In einem vierten Kalibrierschritt KS4 wird anhand der ausgelesenen Werte, insbesondere anhand des ausgelesenen Zeigerpositionssignals PS, eine Winkelposition des Beschleunigungssensors 5 berechnet. In einem fünften Kalibrierschritt KS5 werden die Istwerte gespeichert, insbesondere eine Beschleunigung in x-Richtung und eine Beschleunigung in y-Richtung des zweidimensionalen oder dreidimensionalen Koordinatensystems und die berechnete Winkelposition.

In einem sechsten Kalibrierschritt KS6 wird überprüft, ob eine volle Umdrehung des Zeigers mit dem Beschleunigungssensor 5 um 360° bereits erreicht ist. Wenn nein n, wird in einem siebten Kalibrierschritt KS7 der Schrittmotor 4 vom Steuercomputer 7 angesteuert, um eine vorgegebene Anzahl von Schritten durchzuführen, und anschließend wird das Selbstkalibrierungsverfahren ab dem dritten Kalibrierschritt KS3 fortgesetzt. Wenn ja j, d. h. wenn im sechsten Kalibrierschritt KS6 festgestellt wird, dass bereits eine volle Umdrehung des Zeigers mit dem Beschleunigungssensor 5 um 360° erreicht ist, werden in einem achten Kalibrierschritt KS8 die Kalibrierwerte berechnet, insbesondere aus dem Minimum und Maximum der Beschleunigung in x-Richtung und aus dem Minimum und Maximum der Beschleunigung in y-Richtung und den zugehörigen Winkelpositionen.

In einem neunen Kalibrierschritt KS9 werden die berechneten Kalibrierwerte in den Beschleunigungssensor 5 geschrieben. Die Kalibrierung erfolgt dadurch vorteilhafterweise auf ± 1g (g = Erdbeschleunigung von 9,81 m/s²).

In einem zehnten Kalibrierschritt KS10 wird der Beschleunigungssensor 5 erneut durch die Leseeinheit 6 ausgelesen und überprüft, ob der Beschleunigungssensor 5 auch nach der Kalibrierung relevante Werte, insbesondere ein relevantes Zeigerpositionssignal PS, liefert. Dies dient insbesondere der Überprüfung, ob das Beschreiben des Beschleunigungssensors 5 korrekt erfolgt ist und er funktioniert und verwendet werden kann.

Wenn dies nicht der Fall ist, gekennzeichnet durch das Bezugszeichen n, wird das Selbstkalibrierungsverfahren ab dem ersten Kalibrierschritt KS1 fortgesetzt. Andernfalls, d. h. wenn das Auslesen des Beschleunigungssensors 5 und die Überprüfung, ob er relevante Werte liefert, erfolgreich war, gekennzeichnet durch das Bezugszeichen j, ist das Ende EK des Selbstkalibrierungsverfahrens erreicht.

### BEZUGSZEICHENLISTE

- 1: Turmuhr
- 2: Uhrzeitanzeigeeinheit
- 3: Zifferblatt
- 4: Schrittmotor
- 5: Beschleunigungssensor
- 6: Leseeinheit
- 7: Steuercomputer
- 8: Kabel
- 9: mechanischer Wandler
- 10: Kardangelenk
- 11: Durchführungsöffnung
- 12: Netzwerkausgang

- EK: Ende
- j: ja
- KS: Kalibrierstart
- KS1 bis KS10: Kalibrierschritt
- n: nein
- PS: Zeigerpositionssignal
- SK: Selbstkalibrierung
- VS: Verfahrensstart
- VS1 bis VS12: Verfahrensschritt
- W1: erste Uhrenwelle
- Z1: erster Zeiger
- ZS: Zeitsignal

## Patentansprüche

1. Turmuhr (1), aufweisend
- eine Uhrzeitanzeigeeinheit (2) mit einem Zifferblatt (3) und mindestens zwei Zeigern,
- einen Schrittmotor (4), der mit dem ersten Zeiger (Z1) über eine erste Uhrenwelle (W1) verbunden ist,
- einen als 2D-Beschleunigungssensor oder als 3D-Beschleunigungssensor ausgebildeten Beschleunigungssensor (5), der an dem ersten Zeiger (Z1) oder an einem mit dem ersten Zeiger (Z1) mechanisch direkt verbundenen Teil befestigt ist,
- eine Leseeinheit (6) zum kontaktlosen Auslesen des Beschleunigungssensors (5), und
- einen mit der Leseeinheit (6) und mit dem Schrittmotor (4) gekoppelten Steuercomputer (7), der ausgebildet ist zum Empfangen eines Zeitsignals (ZS), zum Empfangen eines durch die Leseeinheit (6) ausgelesenen Zeigerpositionssignals (PS) des Beschleunigungssensors (5) und zur Ansteuerung des Schrittmotors (4) in Abhängigkeit vom Zeitsignal (ZS) und vom Zeigerpositionssignal (PS).

2. Turmuhr (1) nach Anspruch 1,
aufweisend einen mechanischen Wandler (9), über welchen der Schrittmotor (4) mit der ersten Uhrenwelle (W1) verbunden ist.

3. Turmuhr (1) nach einem der vorhergehenden Ansprüche,
aufweisend ein Kardangelenk (10) zwischen der ersten Uhrenwelle (W1) und einer Ausgangswelle des Schrittmotors (4) oder des mechanischen Wandlers (9).

4. Turmuhr (1) nach einem der vorhergehenden Ansprüche,
wobei die Leseeinheit (6) eine Durchführungsöffnung (11) für die erste Uhrenwelle (W1) aufweist und koaxial zur ersten Uhrenwelle (W1) angeordnet ist, wobei die Durchführungsöffnung (11) einen größeren Durchmesser aufweist als die durch die Durchführungsöffnung (11) hindurchgeführt angeordnete erste Uhrenwelle (W1).

5. Turmuhr (1) nach einem der vorhergehenden Ansprüche,
wobei der Beschleunigungssensor (5) länglich ausgebildet und/oder in einem länglichen Gehäuse angeordnet ist und am ersten Zeiger (Z1) angeordnet ist.

6. Turmuhr (1) nach einem der Ansprüche 1 bis 4,
wobei der Beschleunigungssensor (5) rund ausgebildet und/oder in einem runden Sensorgehäuse angeordnet ist und koaxial zur ersten Uhrenwelle (W1) an der ersten Uhrenwelle (W1) befestigt ist.

7. Turmuhr (1) nach einem der vorhergehenden Ansprüche,
**dadurch gekennzeichnet, dass** die Leseeinheit (6) über ein Kabel (8) zur Datenübertragung und elektrischen Energieversorgung mit dem Steuercomputer (7) gekoppelt ist.

8. Turmuhr (1) nach Anspruch 2 bis 7,
wobei der mechanische Wandler (9) über eine zweite Uhrenwelle mit dem zweiten Zeiger verbunden ist, wobei die erste Uhrenwelle (W1) und die zweite Uhrenwelle im mechanischen Wandler (9) über ein Getriebe miteinander gekoppelt sind.

9. Turmuhr (1) nach einem der Ansprüche 2 bis 8,
wobei der mechanische Wandler (9) als ein Verteiler ausgebildet ist, über welchen der Schrittmotor (4) mit einem weiteren ersten Zeiger mindestens einer weiteren Uhrzeitanzeigeeinheit über eine weitere erste Uhrenwelle verbunden ist.

10. Turmuhr (1) nach einem der vorhergehenden Ansprüche,
wobei der Steuercomputer (7) über ein Datenübertragungsnetzwerk mit einem Zeitsignalgeber und/oder mit einem Betreiberserver verbunden ist.

11. Verfahren zum Betrieb einer Turmuhr (1) nach einem der vorhergehenden Ansprüche, wobei in vorgegebenen Zeitintervallen jeweils das Zeigerpositionssignal (PS) ausgelesen wird, daraus eine tatsächlich vorliegende Zeigerposition ermittelt wird, die ermittelte tatsächlich vorliegende Zeigerposition mit einer dem Zeitsignal (ZS) entsprechenden Zeigerposition verglichen wird, bei einer über einem vorgegebenen Limit liegenden Abweichung der ermittelten tatsächlich vorliegende Zeigerposition von der dem Zeitsignal (ZS) entsprechenden Zeigerposition eine der Abweichung entsprechende Anzahl von Schritten des Schrittmotors (4) berechnet wird und der Schrittmotor (4) zur Ausführung der berechneten Anzahl der Schritte angesteuert wird.
